# DEMANDE DE BREVET EUROPEEN

(11) **EP 4 797 283 A1**
(43) Date de publication de la demande: **26.08.2026**
(21) Numéro de dépôt: 25315059.3
(22) Date de dépôt: 21.02.2025
(51) Int. Cl.: G21C 15/28, G21C 1/22, G21C 3/54

(54) **MÉLANGE COMPRENANT UN MÉLANGE DE SELS DE CHLORURES FONDUS ET LE COUPLE SMCL3/SMCL2**

(71) Demandeur: Naarea, 92000 Nanterre (FR); Centre National de la Recherche Scientifique, 75016 Paris (FR); Université Paris-Saclay, 91190 Gif-sur-Yvette (FR)
(72) Inventeur: Carrière, Charly, 92000 Nanterre (FR); Rame, Jérémy, 92000 Nanterre (FR); Delpech, Sylvie, 91405 Orsay Cedex (FR); Cannes, Céline, 91405 Orsay Cedex (FR); Cabrières, Marc, 92000 Nanterre (FR)

(57) **Abrégé**

La présente invention concerne un mélange m(C) comprenant un mélange de sels de chlorures fondus, que l'on peut par exemple utiliser dans le domaine de l'énergie comme le nucléaire et/ou le solaire. La présente invention concerne en outre des procédés de préparation d'un mélange comprenant un mélange de sels de chlorures fondus et un dispositif comprenant un élément configuré pour contenir ou faire circuler le mélange m(C) selon la présente invention, ou le mélange obtenable ou obtenu selon les procédés de la présente invention, l'élément ayant une paroi comprenant un ou plusieurs métaux parmi Fe, Ni et Cr en contact avec ledit mélange.

## Description

La présente invention se rapporte au domaine des énergies bas carbone, des réacteurs, des réacteurs nucléaires de 4^{ème} génération (réacteurs à sels fondus), et des énergies solaires de type centrales à concentration.

La présente invention concerne un mélange m(C) comprenant un mélange de sels de chlorures fondus, que l'on peut par exemple utiliser dans le domaine de l'énergie comme le nucléaire et/ou le solaire. La présente invention concerne en outre des procédés de préparation d'un mélange comprenant un mélange de sels de chlorures fondus et un dispositif comprenant un élément configuré pour contenir ou faire circuler le mélange m(C) selon la présente invention, ou le mélange obtenable ou obtenu selon les procédés de la présente invention, l'élément ayant une paroi comprenant un ou plusieurs métaux parmi Fe, Ni et Cr en contact avec ledit mélange. Enfin, la présente invention concerne une méthode de protection de matériaux métalliques comprenant un ou plusieurs métaux parmi Fe, Ni et Cr pour les placer dans leur domaine d'immunité lors d'un procédé de fission nucléaire dans un ou plusieurs réacteurs de fission nucléaire à sels fondus, ou lors d'un procédé de récupération de chaleur, ou lors d'un procédé de stockage d'énergie dans une centrale solaire thermique à concentration, la méthode utilisant le mélange m(C) de la présente invention, ou le mélange obtenable ou obtenu selon les procédés de la présente invention.

Les sels fondus, grâce à leur conductivité ionique, stabilité thermique et large plage de températures liquides, peuvent être utilisés dans divers domaines, notamment pour le stockage d'énergie thermique (par exemple dans une centrale solaire thermique à concentration, ci-après « CSP ») et les réacteurs à sels fondus, appelés en anglais « Molten Salt Reactor » (ci-après « MSR »). Dans les réacteurs à sels fondus, ils peuvent servir de caloporteurs, permettant un transfert thermique efficace.

Cependant la nature corrosive des sels fondus et leur température élevée représentent un défi majeur pour le fonctionnement à long terme et l'intégrité des matériaux utilisés pour les CSP et MSR. Contrairement aux environnements aérien ou aqueux, où les oxydes natifs formés sur les métaux structurels protègent contre la corrosion, leur stabilité dans les sels fondus n'est pas assurée. Ces couches protectrices d'oxyde sont dégradées puis dissoutes dans les sels fondus, entraînant la dissolution active du métal. Les mécanismes de corrosion incluent la dissolution anodique des espèces de Fe, Cr et Ni, ainsi que des formes additionnelles de corrosion intergranulaire ou par piqûres, selon les alliages utilisés. Les aciers inoxydables et les alliages à base de nickel sont particulièrement affectés posant ainsi des problèmes de fonctionnement et de longévité des installations comprenant notamment des réacteurs à sels fondus ou tout autres types d'éléments à base de ces matériaux.

C'est pourquoi, la maîtrise des phénomènes d'altération des métaux est par conséquent primordiale et il y a un besoin de proposer des solutions permettant de réduire ou limiter ces problèmes de corrosion pour rendre les installations, utilisant des sels fondus chlorés, plus durable et ce même dans des domaines de température de l'ordre de 400-900°C.

Ainsi, l'objet de la présente invention est de proposer un mélange permettant d'abaisser significativement et durablement le caractère oxydant des sels fondus, afin de placer les matériaux dans leur domaine d'immunité dans des gammes de températures élevées allant de 400 à 900 °C et garantir ainsi leur intégrité (la corrosion est donc limitée), un procédé de préparation de ce type de mélange et des applications de ce type de mélange ainsi qu'une méthode de protection de matériaux métalliques comprenant un ou plusieurs métaux parmi Fe, Ni et Cr pour les placer dans leur domaine d'immunité lors d'un procédé de fission nucléaire dans un ou plusieurs réacteurs de fission nucléaire à sels fondus, ou lors d'un procédé de récupération de chaleur, ou lors d'un procédé de stockage d'énergie dans une centrale solaire thermique à concentration.

Ainsi, la présente invention concerne un mélange m(C) comprenant :
- un mélange de sels de chlorures fondus ;
- un mélange comprenant SmCl₃ et SmCl₂, dans lequel le rapport de la concentration de SmCl₃, exprimée en mol/kg, relatif à la concentration de SmCl₂, exprimée en mol/kg, dans le mélange m(C), [SmCl₃]/[SmCl₂], est dans la gamme de 1 : 1000 à 1 :2 ;
- un métal M1 sélectionné dans le groupe consistant en aluminium, magnésium et zirconium.

Le couple SmCl₃/SmCl₂ permet d'abaisser et de tamponner le potentiel des sels de chlorures. Le métal M1 permet de capter les impuretés notamment O²⁻, ce qui évite de faire précipiter le SmCl₂ ou SmCl₃ en Sm₂O₃ ou SmOCl, et donc sortir de la gamme préférée du rapport de concentration SmCl₃/SmCl₂ qui conduirait à une augmentation du potentiel du mélange (des sels). Ainsi, l'utilisation du mélange m(C) selon la présente invention permet de réduire significativement la corrosion des matériaux avec lesquels il est en contact. Avec ce mélange, le caractère oxydant des sels de chlorures fondus est abaissé significativement et durablement, et permet de placer les matériaux dans leur domaine d'immunité dans des gammes de températures élevées allant de 400 à 900 °C et de garantir ainsi leur intégrité (corrosion limitée).

De préférence le mélange de sels de chlorures fondus est un mélange binaire ou ternaire de chlorures de métaux alcalins et/ou alcalino-terreux, plus préférablement le mélange de sels de chlorures fondus est NaCl-MgCl₂, NaCl-KCl-MgCl₂, MgCl₂-KCl, NaCl-MgCl₂-CeCl₃, LiCl-KCl, ou NaCl-CaCl₂, plus préférablement est NaCl-MgCl₂, NaCl-KCl-MgCl₂, MgCl₂-KCl ou NaCl-MgCl₂-CeCl₃, plus préférablement est NaCl-MgCl₂. De préférence le mélange de sels de chlorures fondus NaCl-MgCl₂ est constitué de 44-45 % massique de NaCl et de 56-55 % massique de MgCl₂.

De préférence le rapport de la concentration de SmCl₃, exprimée en mol/kg, relatif à la concentration de SmCl₂, exprimée en mol/kg, dans le mélange m(C), [SmCl₃]/[SmCl₂], est dans la gamme de 1 :300 à 1 :3, plus préférablement dans la gamme de 1 :100 à 1 :4, plus préférablement dans la gamme de 1 :100 à 1 :5. Par exemple, le rapport de la concentration de SmCl₃, exprimée en mol/kg, relatif à la concentration de SmCl₂, exprimée en mol/kg, dans le mélange m(C), [SmCl₃]/[SmCl₂], peut être dans la gamme de 1 :75 à 1 :5.

Le rapport de concentrations [SmCl₃]/[SmCl₂] se déduit de l'équation de Nernst (Eq.1) ${E}_{sel} = {E}_{{SmCl}_{3} / {SmCl}_{2}}^{0} + 2 , 3 \frac{RT}{nF} log \left(\frac{{a}_{{SmCl}_{3}}}{{a}_{{SmCl}_{2}} \times \left({a}_{{Cl}^{-}}\right)}\right)$ avec
Eₛₑₜ est le potentiel du sel NaCl-MgCl₂ tamponné par le couple SmCl₃/SmCl₂ (potentiel du mélange m(C)) en Volt ;
E°_{SmCl3/SmCl2} est le potentiel standard du couple SmCl₃/SmCl₂ en Volt ;
R est la constante des gaz parfaits ;
T est la température Kelvin ;
n est le nombre d'électrons échangés ;
F est la constante de Faraday ;
a(SmCl₂) est l'activité du réducteur ;
a(SmCl₃) est l'activité de l'oxydant ;
a(Cl⁻) est l'activité de ions chlorures.

De préférence le métal M1 est de l'aluminium (Al) ou du magnésium (Mg), de préférence l'aluminium (AI).

De préférence le métal M1 est sous forme solide, plus préférablement M1 est une tige, un fil ou un tamis, plus préférablement une tige ou un fil.

De préférence la concentration en chlorures de samarium est dans la gamme de 0,005 à 0,7 mol, plus préférablement dans la gamme de 0,01 à 0,5 mol, plus préférablement dans la gamme de 0,05 à 0,2 mol, plus préférablement dans la gamme de 0,07 à 0,15 mol, par kg de sels de chlorures.

De préférence le mélange m(C) selon la présente invention est un mélange caloporteur.

De préférence, le mélange m(C) selon la présente invention est un mélange utilisé pour un réacteur de fission nucléaire à sels fondus (RSF), appelé en anglais « Molten Salt Reactor », et/ou pour le stockage d'énergie thermique dans une centrale solaire thermique à concentration (CSP) et/ou pour la récupération de chaleur.

De préférence le mélange m(C) selon la présente invention a une température dans la gamme de 400 °C à 900 °C, plus préférablement dans la gamme de 425 °C à 850 °C, plus préférablement dans la gamme de 450 °C à 800 °C.

De préférence le mélange de sels de chlorures est un mélange purifié.

En effet, de préférence, le mélange de sels de chlorures avant d'être utilisé dans m(C) est préalablement purifié selon des procédés de purification connus de la personne du métier.

La présente invention concerne en outre un procédé de préparation d'un mélange, de préférence du mélange m(C) selon la présente invention, le procédé comprenant :
(i) la fourniture d'un mélange de sels de chlorures ;
(ii) le chauffage du mélange de sels de chlorures fournis selon (i), de préférence à une température minimale correspondant à la température eutectique du mélange de sels de chlorures, obtenant un mélange de sels de chlorures fondus, et optionnellement la purification du mélange ;
(iii) préparation d'un mélange comprenant SmCl₃ et SmCl₂ dans un récipient comprenant le mélange de sels de chlorures fondus, optionnellement purifié, comprenant
   (iii.1) l'introduction de SmCl₃ dans ledit récipient ;
   (iii.2) l'ajout d'un agent réducteur, l'agent réducteur étant de l'aluminium ou du magnésium, dans le récipient ;
   (iii.3) la mise en contact de l'agent réducteur ajouté selon (iii.2) et SmCl₃ introduit selon (iii. 1), obtenant le mélange comprenant SmCl₃ et SmCl₂ dans le récipient comprenant le mélange de sels de chlorures fondus ;
(iv) l'ajout d'un métal M1 dans le récipient comprenant le mélange de sels de chlorures fondus et le mélange comprenant SmCl₃ et SmCl₂ obtenu selon (iii), M1 étant sélectionné dans le groupe consistant en aluminium, magnésium et zirconium.

Dans le contexte de la présente invention, le chauffage et optionnellement la purification sont effectués préférablement dans un récipient, qui peut être distinct, ou non, de celui utilisé dans (iii) et (iv).

De préférence durant le chauffage selon (ii) les sels de chlorures sont mélangés, avec agitation ou non, plus préférablement sans agitation. Sans agitation le mélange se fait par diffusion et permet une répartition homogène.

Pour la préparation du mélange selon (iii), le mélange de sels de chlorures fondus est préalablement introduit dans le récipient.

Selon la présente invention, la température de chauffe selon (ii) peut être dans la gamme de 400 °C à 900 °C, ou dans la gamme de 425 °C à 850 °C, ou dans la gamme de 450 °C à 800 °C.

De préférence (ii) comprend
(ii.1) le chauffage du mélange de sels de chlorures fournis selon (i), plus préférablement à une température minimale correspondant à la température eutectique du mélange de sels de chlorures, plus préférablement pendant une durée dans la gamme de 12 h à 180 h, plus préférablement dans la gamme de 48 h à 175 h, plus préférablement dans la gamme de 96 h à 170 h, obtenant un mélange de sels de chlorures fondus ;
(ii.2) le refroidissement du mélange de sels de chlorures fondus obtenus selon (ii.1), obtenant des sels de chlorures cristallisés et un précipité ;
(ii.3) la séparation, plus préférablement mécanique, des sels de chlorures cristallisés et du précipité obtenus selon (ii.2) ;
(ii.4) le chauffage des sels de chlorures cristallisés séparés selon (ii.3) à une température minimale correspondant à la température eutectique du mélange de sels de chlorures, obtenant un mélange de sels de chlorures fondus purifié.

De préférence le ou les étapes de chauffage selon (ii) sont effectués, avec ou sans agitation.

Par exemple selon (ii) la température minimale correspondant à la température eutectique du mélange de sels de chlorures est dans la gamme de 400 °C à 900 °C, de préférence dans la gamme de 425 °C à 850 °C, plus préférablement dans la gamme de 450 °C à 800 °C.

Dans le contexte de la présente invention, il a été trouvé que, grâce à la présence du métal M1 qui capte les impuretés comme les ions O²⁻, la précipitation de SmCl₂ ou de SmCl₃ en Sm₂O₃ ou en SmOCl, est évitée, permettant le maintien du rapport de concentrations SmCl₃/SmCl₂ évitant ainsi une augmentation du potentiel du mélange m(C) (des sels). De plus, la purification du mélange de sels de chlorures fondus décrite selon (ii) permet aussi d'éviter la précipitation des sels de samarium dans les sels fondus et de réduire la quantité d'agent réducteur ajouté selon (iii.2) afin d'obtenir le couple SmCl₃/SmCl₂ dans les quantités souhaitées.

De préférence le refroidissement selon (ii.2) se fait par arrêt du moyen de chauffe (par exemple en éteignant le four).

Alternativement la purification selon (ii) peut se faire par électrolyse.

Dans le contexte de la présente invention, il est préféré qu'au moins une parmi (i), (ii), (iii) et (iv) sont effectuées dans des conditions anhydres, plus préférablement en présence d'un gaz inerte ou d'azote.

De préférence le gaz inerte est choisi parmi l'argon, l'hélium, le krypton, le xénon, et le néon, plus préférablement le gaz inerte est l'argon.

De préférence (i), (ii), (iii) et (iv) sont effectuées dans des conditions anhydres, de préférence en présence d'un gaz inerte ou d'azote.

De préférence selon (ii.3) la séparation des sels de chlorures cristallisés et du précipité (MgO) obtenus selon (ii.2) est mécanique et comprend le broyage des sels cristallisés et le retrait du précipité.

De préférence, selon (iii.1), SmCl₃ est ajouté à une concentration dans la gamme de 0,005 à 0,7 mol, plus préférablement dans la gamme de 0,01 à 0,5 mol, plus préférablement dans la gamme de 0,05 à 0,2 mol, plus préférablement dans la gamme de 0,07 à 0,15 mol, par kg de sels de chlorures.

De préférence le ratio molaire de l'agent réducteur ajouté selon (iii.2) relatif à SmCl₃ introduit selon (iii.1) est dans la gamme de 0.75 :1 à 6 :1, plus préférablement dans la gamme de 0.9 :1 à 5 :1, plus préférablement dans la gamme de 0.95 :1 à 1 :0.95 ou plus préférablement dans la gamme de 2 :1 à 5 :1.

Dans le contexte de la présente invention, il est à noter que la personne du métier peut ajuster ce ratio molaire de l'agent réducteur ajouté selon (iii.2) relatif à SmCl₃ introduit selon (iii.1) en fonction du potentiel du sel qu'il mesure ; en effet une partie de l'agent réducteur, à savoir Al ou Mg, de préférence Mg, peut précipiter ou peut s'évaporer en captant les impuretés et donc ne participe pas à la réaction de réduction de SmCl₃ en SmCl₂.

De préférence, la mise en contact selon (iii.3) est effectuée à une température dans la gamme de 400 °C à 900 °C, plus préférablement dans la gamme de 425 °C à 850 °C, plus préférablement dans la gamme de 450 °C à 800 °C.

De préférence l'agent réducteur ajouté en (iii.2) est sous la forme de poudre, de granules ou de plaques, plus préférablement sous la forme de poudre ou de granules.

De préférence, les particules de poudre ou les granules ont un diamètre moyen dans la gamme de 0,25 à 1 mm, plus préférablement dans la gamme de 0,3 à 0,75 mm. Ce type d'agent réducteur sous forme de poudre ou granules est disponible dans le commerce.

De préférence le métal M1 est ajouté selon (iv) sous forme de tige ou de fil ou de tamis, plus préférablement sous forme de tige ou de fil, dans le récipient.

La présente invention concerne en outre un procédé de préparation d'un mélange, de préférence du mélange m(C) selon la présente invention, le procédé comprenant :
(i') la fourniture d'un mélange de sels de chlorures;
(ii') optionnellement la purification du mélange de sels de chlorures fourni selon (i'), obtenant un mélange de sels de chlorures purifiés ;
(iii') préparation d'un mélange comprenant SmCl₃ et SmCl₂ dans un récipient comprenant le mélange de sels de chlorures fourni selon (i'), optionnellement un mélange de sels de chlorures purifiés obtenus selon (ii'), comprenant
   (iii'.1) l'introduction de SmCl₃ dans le récipient;
   (iii'.2) le chauffage du mélange de sels de chlorures fournis selon (i') et du SmCl₃ après son introduction dans le récipient selon (iii'.1), de préférence à une température minimale correspondant à la température eutectique du mélange de sels de chlorures, obtenant un mélange de sels fondus ;
   (iii'.3) l'ajout d'un agent réducteur, l'agent réducteur étant de l'aluminium ou du magnésium, au mélange de sels fondus obtenus selon (iii'.2) dans le récipient ;
   (iii'.4) la mise en contact de l'agent réducteur ajouté selon (iii'.3) et SmCl₃ introduit selon (iii'.1), obtenant le mélange comprenant SmCl₃ et SmCl₂ dans le récipient comprenant le mélange de sels de chlorures fondus ;
(iv') l'ajout d'un métal M1 dans le récipient comprenant le mélange de sels de chlorures fondus et le mélange comprenant SmCl₃ et SmCl₂ obtenu selon (iii'), M1 étant sélectionné dans le groupe consistant en aluminium, magnésium et zirconium.

De préférence selon (i') et/ou (ii') les sels de chlorures sont mélangés, avec agitation ou non, dans un récipient, plus préférablement sans agitation. Sans agitation le mélange se fait par diffusion et permet une répartition homogène.

Dans le contexte de la présente invention, le récipient utilisé selon (i') et (ii') peut être distinct, ou non, que celui utilisé dans (iii') et (iv').

De préférence la purification selon (ii') comprend
(ii'.1) le chauffage du mélange de sels de chlorures fournis selon (i'), plus préférablement à une température minimale correspondant à la température eutectique du mélange de sels de chlorures, plus préférablement pendant une durée dans la gamme de 12 h à 180 h, plus préférablement dans la gamme de 48 h à 175 h, plus préférablement dans la gamme de 96 h à 170 h, obtenant un mélange de sels de chlorures fondus ;
(ii'.2) le refroidissement du mélange de sels de chlorures fondus obtenus selon (ii'.1), obtenant des sels de chlorures cristallisés et un précipité ;
(ii'.3) la séparation, plus préférablement mécanique, des sels de chlorures cristallisés et du précipité obtenus selon (ii'.2), obtenant un mélange de sels de chlorures purifié.

De préférence le ou les étapes de chauffage selon (ii') et/ou (iii') sont effectués, avec ou sans agitation.

Par exemple selon (ii') et/ou (iii') la température minimale correspondant à la température eutectique du mélange de sels de chlorures est dans la gamme de 400 °C à 900 °C, de préférence dans la gamme de 425 °C à 850 °C, plus préférablement dans la gamme de 450 °C à 800 °C.

Dans le contexte de la présente invention, il a été trouvé que, grâce à la présence du métal M1 qui capte les impuretés comme les ions O²⁻, la précipitation de SmCl₂ ou de SmCl₃ en Sm₂O₃ ou en SmOCl est évitée, permettant le maintien du rapport de concentrations SmCl₃/SmCl₂ évitant ainsi une augmentation du potentiel du mélange m(C) (des sels). De plus, la purification du mélange de sels de chlorures fondus décrite selon (ii') permet aussi d'éviter la précipitation des sels de samarium dans les sels fondus et de réduire la quantité d'agent réducteur ajouté selon (iii'.3) afin d'obtenir le couple SmCl₃/SmCl₂ dans les quantités souhaitées.

De préférence le refroidissement selon (ii'.2) se fait par arrêt du moyen de chauffe (par exemple coupure du four).

Alternativement la purification selon (ii') peut se faire par électrolyse.

Dans le contexte de la présente invention, il est préféré qu'au moins une parmi (i'), (ii'), (iii') et (iv') sont effectuées dans des conditions anhydres, plus préférablement en présence d'un gaz inerte ou d'azote (N₂).

De préférence le gaz inerte est choisi parmi l'argon, l'hélium, le krypton, le xénon, et le néon, plus préférablement le gaz inerte est l'argon.

De préférence (i'), (ii'), (iii') et (iv') sont effectuées dans des conditions anhydres, de préférence en présence d'un gaz inerte ou d'azote.

De préférence selon (ii'.3) la séparation des sels de chlorures cristallisés et du précipité obtenus selon (ii'.2) est mécanique et comprend le broyage des sels cristallisés et le retrait du précipité.

De préférence, selon (iii'.1), SmCl₃ est ajouté à une concentration dans la gamme de 0,005 à 0,7 mol, plus préférablement dans la gamme de 0,01 à 0,5 mol, plus préférablement dans la gamme de 0,05 à 0,2 mol, plus préférablement dans la gamme de 0,07 à 0,15 mol, par kg de sels de chlorures.

De préférence le ratio molaire de l'agent réducteur ajouté selon (iii'.3) relatif à SmCl₃ introduit selon (iii'.1) est dans la gamme de 0.75 :1 à 6 :1, plus préférablement dans la gamme de 0.9 :1 à 5 :1, plus préférablement dans la gamme de 0.95 :1 à 1 :0.95 ou plus préférablement dans la gamme de 2 :1 à 5 :1.

Dans le contexte de la présente invention, il est à noter que la personne du métier peut ajuster ce ratio molaire de l'agent réducteur ajouté selon (iii'.3) relatif à SmCl₃ introduit selon (iii'.1) en fonction du potentiel du sel qu'il mesure ; en effet une partie de l'agent réducteur, à savoir Al ou Mg, de préférence Mg, peut précipiter ou peut s'évaporer en captant les impuretés et donc ne participe pas à la réaction de réduction de SmCl₃ en SmCl₂.

De préférence, la mise en contact selon (iii'.4) est effectuée à une température dans la gamme de 400 °C à 900 °C, plus préférablement dans la gamme de 425 °C à 850 °C, plus préférablement dans la gamme de 450 °C à 800 °C.

De préférence l'agent réducteur ajouté en (iii'.3) est sous la forme de poudre, de granules ou de plaques, plus préférablement sous la forme de poudre ou de granules.

De préférence, les particules de poudre ou les granules ont un diamètre moyen dans la gamme de 0,25 à 1 mm, plus préférablement dans la gamme de 0,3 à 0,75 mm. Ce type d'agent réducteur sous forme de poudre ou granules est disponible dans le commerce.

De préférence le métal M1 est ajouté selon (iv') sous forme de tige ou de fil ou de tamis, plus préférablement sous forme de tige ou de fil, dans le récipient.

La présente invention concerne en outre un dispositif comprenant :
- un élément configuré pour contenir ou faire circuler un mélange, l'élément ayant une paroi comprenant un ou plusieurs métaux parmi Fe, Ni et Cr en contact avec ledit mélange ;
- le mélange étant le mélange m(C) selon la présente invention, ou le mélange obtenable ou obtenu selon un procédé de préparation d'un mélange selon la présente invention.

De préférence le mélange m(C) selon la présente invention et le mélange obtenable ou obtenu selon un procédé de la présente invention est un mélange caloporteur.

De préférence l'élément configuré pour contenir ou faire circuler un mélange est un réacteur, une cuve, un réservoir et/ou un tube.

De préférence, la paroi de l'élément est faite d'alliage comme un alliage métallique, par exemple un alliage à base de nickel (comme UNS N06625) ou un acier inoxydable, par exemple du type 316L (UNS S31603).

De préférence, le dispositif selon la présente invention est un dispositif pour un réacteur de fission nucléaire à sels fondus (RSF), encore appelés en anglais « molten salt reactor », et/ou pour le stockage d'énergie thermique dans une centrale solaire thermique à concentration (CSP) et/ou pour la récupération de chaleur.

La présente invention concerne en outre l'utilisation du dispositif selon la présente invention pour un réacteur de fission nucléaire à sels fondus (RSF), appelés en anglais « molten salt reactor », et/ou pour le stockage d'énergie thermique dans une centrale solaire thermique à concentration (CSP) et/ou pour la récupération de chaleur.

La présente invention concerne en outre une méthode de protection de matériaux métalliques comprenant un ou plusieurs métaux parmi Fe, Ni et Cr pour les placer dans leur domaine d'immunité lors d'un procédé de fission nucléaire dans un ou plusieurs réacteurs de fission nucléaire à sels fondus, ou lors d'un procédé de récupération de chaleur, ou lors d'un procédé de stockage d'énergie dans une centrale solaire thermique à concentration (CSP), la méthode comprenant :
l'utilisation d'un mélange m(C) selon la présente invention, ou d'un mélange obtenable ou obtenu selon un procédé de préparation de mélange selon la présente invention ; et
la mise en contact desdits matériaux métalliques avec le mélange m(C).

De préférence le mélange m(C) selon la présente invention et le mélange obtenable ou obtenu selon le procédé de la présente invention est un mélange caloporteur.

La présente invention est en outre illustrée par l'ensemble suivant de modes de réalisation et de combinaisons de modes de réalisation résultant des dépendances et des références arrière comme indiqué. En particulier, il convient de noter que dans chaque cas où une gamme de modes de réalisation est mentionnée, par exemple dans le contexte d'un terme tel que « Le mélange selon l'un quelconque des modes de réalisation 1 à 4 », chaque mode de réalisation dans cette gamme est censé être explicitement divulgué à l'homme du métier, c'est-à-dire que la formulation de ce terme doit être comprise par l'homme du métier comme étant synonyme de « le mélange selon l'un quelconque des modes de réalisation 1, 2, 3 et 4 ». En outre, il est explicitement noté que l'ensemble de modes de réalisation suivant représente une partie convenablement structurée de la description générale dirigée vers des aspects préférés de la présente invention et, par conséquent, soutient de manière appropriée, mais ne représente pas les revendications de la présente invention.

Selon le mode de réalisation 1 de la présente invention, un mélange m(C) est décrit comprenant :
- un mélange de sels de chlorures fondus ;
- un mélange comprenant SmCl₃ et SmCl₂, dans lequel le rapport de la concentration de SmCl₃, exprimée en mol/kg, relatif à la concentration de SmCl₂, exprimée en mol/kg, dans le mélange m(C), [SmCl₃]/[SmCl₂], est dans la gamme de 1 :1000 à 1 :2 ;
- un métal M1 sélectionné dans le groupe consistant en aluminium, magnésium et zirconium.

Mode de réalisation 2 : Le mélange m(C) selon le mode de réalisation 1, dans lequel le mélange de sels de chlorures fondus est un mélange binaire ou ternaire de chlorures de métaux alcalins et/ou alcalino-terreux, de préférence le mélange de sels de chlorures fondus est NaCl-MgCl₂, NaCl-KCl-MgCl₂, MgCl₂-KCl, NaCl-MgClₑ-CeCl₃, LiCl-KCl, ou NaCl-CaCl₂, plus préférablement est NaCl-MgCl₂, NaCl-KCl-MgCl₂, MgCl₂-KCl ou NaCl-MgCl₂-CeCl₃, plus préférablement est NaCl-MgCl₂.

Mode de réalisation 3 : Le mélange m(C) selon le mode de réalisation 1 ou 2, dans lequel le rapport de la concentration de SmCl₃, exprimée en mol/kg, relatif à la concentration de SmCl₂, exprimée en mol/kg, dans le mélange m(C), [SmCl₃]/[SmCl₂], est dans la gamme de 1 :300 à 1 :3, de préférence dans la gamme de 1 :100 à 1 :4, plus préférablement dans la gamme de 1 :100 à 1 :5.

Mode de réalisation 4 : Le mélange m(C) selon l'un quelconque des modes de réalisation 1 à 3, dans lequel M1 est l'aluminium ou le magnésium, de préférence l'aluminium.

Mode de réalisation 5 : Le mélange m(C) selon l'un quelconque des modes de réalisation 1 à 4, dans lequel M1 est sous forme solide, de préférence M1 est une tige, un fil ou un tamis, plus préférablement une tige ou un fil.

Mode de réalisation 6 : Le mélange m(C) selon l'un quelconque des modes de réalisation 1 à 5, dans lequel la concentration en chlorures de samarium est dans la gamme de 0,005 à 0,7 mol, de préférence dans la gamme de 0,01 à 0,5 mol, plus préférablement dans la gamme de 0,05 à 0,2 mol, plus préférablement dans la gamme de 0,07 à 0,15 mol, par kg de sels de chlorures.

Mode de réalisation 7 : Le mélange m(C) selon l'un quelconque des modes de réalisation 1 à 6, étant un mélange caloporteur.

Mode de réalisation 8 : Le mélangé m(C) selon l'un quelconque des modes de réalisation 1 à 7, ayant une température dans la gamme de 400 °C à 900 °C, de préférence dans la gamme de 425 °C à 850 °C, plus préférablement dans la gamme de 450 °C à 800 °C.

Mode de réalisation 9 : Le mélange m(C) selon l'un quelconque des modes de réalisation 1 à 8, dans lequel le mélange de sels de chlorures est un mélange purifié.

Mode de réalisation 10 : Procédé de préparation d'un mélange, de préférence du mélange m(C) selon l'un quelconque des modes de réalisation 1 à 9, le procédé comprenant :
(i) la fourniture d'un mélange de sels de chlorures ;
(ii) le chauffage du mélange de sels de chlorures fournis selon (i), de préférence à une température minimale correspondant à la température eutectique du mélange de sels de chlorures, obtenant un mélange de sels de chlorures fondus et optionnellement la purification du mélange ;
(iii) préparation d'un mélange comprenant SmCl₃ et SmCl₂ dans un récipient comprenant le mélange de sels de chlorures fondus obtenu selon (ii), optionnellement purifié selon (ii), comprenant
   (iii.1) l'introduction de SmCl₃ dans le récipient ;
   (iii.2) l'ajout d'un agent réducteur, l'agent réducteur étant de l'aluminium ou du magnésium, dans le récipient ;
   (iii.3) la mise en contact de l'agent réducteur ajouté selon (iii.2) et SmCl₃ introduit selon (iii.1), obtenant le mélange comprenant SmCl₃ et SmCl₂ dans le récipient comprenant le mélange de sels de chlorures fondus ;
(iv) l'ajout d'un métal M1 dans le récipient comprenant le mélange de sels de chlorures fondus et le mélange comprenant SmCl₃ et SmCl₂ obtenu selon (iii), M1 étant sélectionné dans le groupe consistant en aluminium, magnésium et zirconium.

Mode de réalisation 11 : Le procédé selon le mode de réalisation 10, dans lequel (ii) comprend
(ii.i) le chauffage du mélange de sels de chlorures fournis selon (i), de préférence à une température minimale correspondant à la température eutectique du mélange de sels de chlorures, de préférence pendant une durée dans la gamme de 12 h à 180 h, plus préférablement dans la gamme de 48 h à 175 h, plus préférablement dans la gamme de 96 h à 170 h, obtenant un mélange de sels de chlorures fondus ;
(ii.2) le refroidissement du mélange de sels de chlorures fondus obtenus selon (ii.1), obtenant des sels de chlorures cristallisés et un précipité ;
(ii.3) la séparation, de préférence mécanique, des sels de chlorures cristallisés et du précipité obtenus selon (ii.2) ;
(ii.4) le chauffage des sels de chlorures cristallisés séparés selon (ii.3) à une température dans la gamme de 400 °C à 900 °C, de préférence dans la gamme de 425 °C à 850 °C, plus préférablement dans la gamme de 450 °C à 800 °C, obtenant un mélange de sels de chlorures fondus purifié.

Mode de réalisation 12 : Le procédé selon le mode de réalisation 10 ou 11, dans lequel au moins une parmi (i), (ii), (iii) et (iv) sont effectuées dans des conditions anhydres, de préférence en présence d'un gaz inerte ou d'azote.

Mode de réalisation 13 : Le procédé selon l'un quelconque des modes de réalisation 10 à 12, dans lequel selon (iii.1) SmCl₃ est ajouté à une concentration dans la gamme de 0,005 à 0,7 mol, de préférence dans la gamme de 0,01 à 0,5 mol, plus préférablement dans la gamme de 0,05 à 0,2 mol, plus préférablement dans la gamme de 0,07 à 0,15 mol, par kg de sels de chlorures.

Mode de réalisation 14 : Le procédé selon l'un quelconque des modes de réalisation 10 à 13, dans lequel le ratio molaire de l'agent réducteur ajouté selon (iii.2) relatif à SmCl₃ introduit selon (iii.1) est dans la gamme de 0.75 :1 à 6 :1, de préférence dans la gamme de 0.9 :1 à 5 :1, plus préférablement dans la gamme de 0.95 :1 à 1 :0.95 ou plus préférablement dans la gamme de 2 :1 à 5 :1.

Mode de réalisation 15 : Le procédé selon l'un quelconque des modes de réalisation 10 à 14, dans lequel l'agent réducteur ajouté en (iii.2) est sous la forme de poudre, de granules ou de plaques, de préférence sous la forme de poudre ou de granules.

Mode de réalisation 16 : Le procédé selon l'un quelconque des modes de réalisation 10 à 15, dans lequel M1 est ajouté selon (iv) sous forme de tige ou de fil ou de tamis, de préférence sous forme de tige ou de fil, dans le récipient.

Mode de réalisation 17 : Procédé de préparation d'un mélange, de préférence du mélange m(C) selon l'un quelconque des modes de réalisation 1 à 9, le procédé comprenant :
(i') la fourniture d'un mélange de sels de chlorures;
(ii') optionnellement la purification du mélange de sels de chlorures fourni selon (i'), obtenant un mélange de sels de chlorures purifiés ;
(iii') préparation d'un mélange comprenant SmCl₃ et SmCl₂ dans un récipient comprenant le mélange de sels de chlorures fourni selon (i'), optionnellement le mélange de sels de chlorures purifiés fourni selon (ii'), comprenant
   (iii'.1) l'introduction de SmCl₃ dans ledit récipient;
   (iii'.2) le chauffage du mélange de sels de chlorures fournis selon (i') et du SmCl₃ après son introduction dans le récipient selon (iii'.1), de préférence à une température minimale correspondant à la température eutectique du mélange de sels de chlorures, obtenant un mélange de sels fondus ;
   (iii'.3) l'ajout d'un agent réducteur, l'agent réducteur étant de l'aluminium ou du magnésium, au mélange de sels fondus obtenus selon (iii'.2) dans le récipient ;
   (iii'.4) la mise en contact de l'agent réducteur ajouté selon (iii'.3) et SmCl₃ introduit selon (iii'.1), obtenant le mélange comprenant SmCl₃ et SmCl₂ dans le récipient comprenant le mélange de sels de chlorures fondus ;
(iv') l'ajout d'un métal M1 dans le récipient comprenant le mélange de sels de chlorures fondus et le mélange comprenant SmCl₃ et SmCl₂ obtenu selon (iii'), M1 étant sélectionné dans le groupe consistant en aluminium, magnésium et zirconium.

Mode de réalisation 18 : Dispositif comprenant :
- un élément configuré pour contenir ou faire circuler un mélange, l'élément ayant une paroi comprenant un ou plusieurs métaux parmi Fe, Ni et Cr en contact avec ledit mélange ;
- le mélange étant le mélange m(C) selon l'un quelconque des modes de réalisation 1 à 9, ou le mélange obtenable ou obtenu selon le procédé d'un quelconque des modes de réalisation 10 à 17.

Mode de réalisation 19 : Le dispositif selon le mode de réalisation 18, dans lequel le mélange est un mélange caloporteur.

Mode de réalisation 20 : Le dispositif selon le mode de réalisation 18 ou 19, dans lequel l'élément configuré pour contenir ou faire circuler un mélange est un réacteur, une cuve, un réservoir et/ou un tube.

Mode de réalisation 21 : Utilisation du dispositif selon l'un quelconque de modes de réalisation 18 à 20 pour un réacteur de fission nucléaire à sels fondus (MSR) et/ou pour le stockage d'énergie thermique dans une centrale solaire thermique à concentration (CSP) et/ou pour un procédé de récupération d'énergie.

Mode de réalisation 22 : Méthode de protection de matériaux métalliques comprenant un ou plusieurs métaux parmi Fe, Ni et Cr pour les placer dans leur domaine d'immunité lors d'un procédé de fission nucléaire dans un ou plusieurs réacteurs de fission nucléaire à sels fondus, ou lors d'un procédé de récupération de chaleur, ou lors d'un procédé de stockage d'énergie dans une centrale solaire thermique à concentration (CSP), la méthode comprenant :
l'utilisation d'un mélange m(C) selon l'un quelconque des modes de réalisation 1 à 9, ou d'un mélange obtenable ou obtenu selon un procédé selon l'un quelconque des modes de réalisation 10 à 17 ; et
la mise en contact desdits matériaux métalliques avec le mélange.

Dans le contexte de la présente invention, le ou les potentiels en Volt sont exprimés en fonction de l'électrode de référence AgCl/Ag.

### EXEMPLES

### Exemple de Référence 1 : Purification du sel NaCl-MgCl₂

60 grammes d'un mélange eutectique NaCl-MgCl₂ (44,76 % massique de NaCl et 55,24 % massique de MgCl₂) est mélangé dans un bécher en carbone vitreux en boîte à gants (BAG) sous atmosphère contrôlée (avec une dizaine de ppm d'eau et une teneur en dioxygène inférieure à 1 ppm). Le bécher est ensuite inséré dans une cellule hermétique en quartz, placée dans un four tubulaire connecté à un thermorégulateur afin de chauffer, fondre et purifier le sel pendant une semaine. L'atmosphère inerte dans la cellule est maintenue en appliquant un balayage continu d'argon. Après refroidissement et cristallisation, le MgO précipité en fond de bécher est séparé mécaniquement du sel en BAG. 50 grammes de sel cristallisé et purifié (NaCl-MgCl₂) sont obtenus.

### Exemples 1A et IB : Préparation d'un mélange selon la présente invention comprenant un sel fondu et le couple SmCl₃/SmCl₂

50 grammes de sel cristallisé et purifié obtenu selon l'Exemple de Référence 1 sont placés dans un bécher en carbone vitreux, inséré dans une cellule hermétique en quartz, elle-même replacée dans un four tubulaire sous balayage d'Ar. La température de consigne du thermorégulateur est de 810°C et permet d'atteindre une température cible de 700°C du sel.

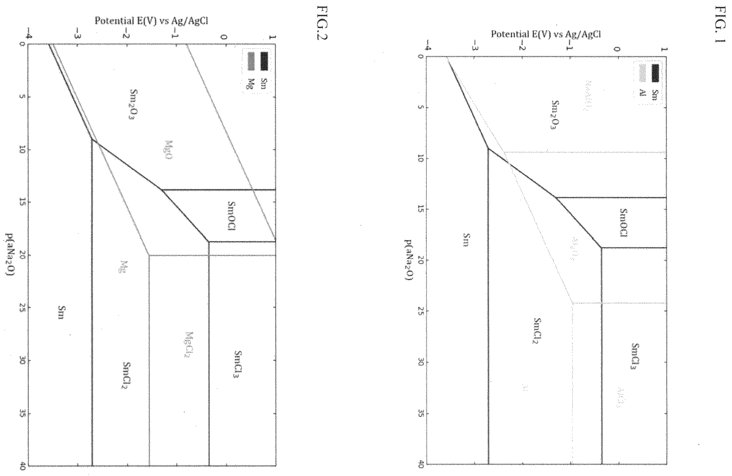

SmCl₃ est inséré, à une concentration de 0,1 mol de SmCl₃ par kg de sel purifié, dans le bécher avec une burette à solide placée sur le dessus de la cellule. Après 2 heures, permettant d'assurer une distribution homogène de SmCl₃ dans ledit sel, un réducteur est introduit en excès afin de réduire le SmCl₃ en SmCl₂. Le réducteur utilisé est Al (Exemple 1A) ou Mg (Exemple 1B), comme mis en évidence par les diagrammes thermodynamiques du Sm avec Al et Sm avec Mg (respectivement, Figure 1 et Figure 2). Une électrode de travail inerte correspond ici à un fil de tungstène inséré permet de déterminer le potentiel E du sel et définir le ratio de concentration SmCl₃/SmCl₂ selon l'équation de Nernst (Eq.1). ${E}_{sel} = {E}_{{SmCl}_{3} / {SmCl}_{2}}^{0} + 2 , 3 \frac{RT}{nF} log \left(\frac{{a}_{{SmCl}_{3}}}{{a}_{{SmCl}_{2}} \times \left({a}_{{Cl}^{-}}\right)}\right)$ avec
E est le potentiel du sel NaCl-MgCl₂ tamponné par le couple SmCl₃/SmCl₂ en Volt ;
E° est le potentiel standard du couple SmCl₃/SmCl₂ en Volt ;
R est la constante des gaz parfaits ;
T est la température Kelvin ;
n est le nombre d'électrons échangés ;
F est la constante de Faraday ;
a(SmCl₂) est l'activité du réducteur ;
a(SmCl₃) est l'activité de l'oxydant ;
a(Cl⁻) est l'activité des ions chlorures.

Pour l'Exemple 1A, quand Al est utilisé comme réducteur, le ratio des concentrations [SmCl₃]/[SmCl₂] est égal à 1 :5.

Pour l'Exemple 1B, quand Mg est utilisé comme réducteur, le ratio des concentrations [SmCl₃]/[SmCl₂] est égal à 1 :30.

Pour chacun des Exemples 1A et 1B, un mélange intermédiaire de sels est ainsi obtenu auquel est enfin ajouté une tige d'Al (aluminium).

### Exemple 2 : Tests de corrosion - Montage expérimental

Chacun des tests d'immersions sont réalisés dans 50 grammes de sel purifié, porté à 700°C, avec un montage à trois électrodes. L'électrode de référence est constituée d'un fil d'argent plongé dans un mélange LiCl-KCl-AgCl (0,75 mol.kg⁻¹) dans un tube de verre Pyrex (diamètre 8 mm). Une tige de graphite (diamètre 3,5 mm) est utilisée comme contre-électrode. Un potentiostat VersaSTAT4 (AMETEK, USA) est utilisé pour les mesures de potentiel en circuit ouvert (OCP) et de voltampérométrie cyclique (CV). Les analyses potentiométriques sont enregistrées pendant 5 min, après stabilisation du potentiel de l'électrode de travail dans le sel. Un soin est notamment porté à ce qu'aucune électrode ne soit en contact, ni entre elles, ni avec le bécher.

Les essais de corrosion débutent une fois le potentiel du sel de -0,9 V vs AgCl/Ag (électrode de référence) atteint - *cette valeur de potentiel du sel est atteinte avec le ratio approprié SmCl₃*/*SmCl₂.* Ainsi les électrodes d'alliage 316L (UNS S31603) et d'alliage 625 (UNS N06625) (insérées dans une gaine en pyrex) de masse connue faisant 1 mm d'épaisseur sont immergées dans le sel. 5 mm à 15 mm de hauteur desdites électrodes sont immergés dans un mélange de sel fondu contenant le couple SmCl₃/SmCl₂ et la tige d'Al (mélange selon l'Exemple 1A). La tige d'Al est placée de façon à ce qu'elle ne soit pas en contact avec les électrodes métalliques - elle permet de capter les ions oxydes O²⁻ qui pourraient causer une augmentation du potentiel du sel. Deux expériences de corrosion de 13 jours, l'une pour le 316L et l'autre pour l'alliage 625, ont lieu dans les mêmes conditions mais dans deux sels séparés comme indiqué plus haut afin de s'affranchir des problèmes de contamination, influence de la chimie du sel et concentration des éléments dissouts. Un suivi de potentiel à intervalle de temps régulier, pris par l'électrode d'alliage 316L et 625, à intervalle de temps régulier, est effectué pendant toute la durée du test. Les électrodes sont systématiquement déconnectées à l'issue de l'analyse afin de ne pas laisser le matériau sous polarisation, susceptible de générer une corrosion non souhaitée. Les caractérisations *post mortem* ont lieu sur l'électrode de travail préalablement enrésinée et polie, par analyses en microscopie électronique à balayage couplée à un détecteur de rayon X à dispersion d'énergie (MEB-EDS). Une mesure du potentiel du sel tamponné par SmCl₃/SmCl₂ à 0 jours et à 14 jours est aussi effectué avec une électrode inerte pour contrôle.

D'autres essais de corrosion ont été effectués avec un autre couple red/ox, à savoir couple TiCl₃/TiCl₂. Les essais débutent une fois le potentiel du sel NaCl-MgCl₂ égal à -0,75 V vs AgCl/Ag (électrode de référence) atteint. Le suivi se fait selon la procédure indiquée plus haut pour les expériences avec le couple SmCl₃/SmCl₂ et la tige d'Al. Une mesure du potentiel du sel tamponné par le couple TiCl₃/TiCl₂ à 0 jours et à 14 jours est aussi effectué avec une électrode inerte pour contrôle.

### Résultats :

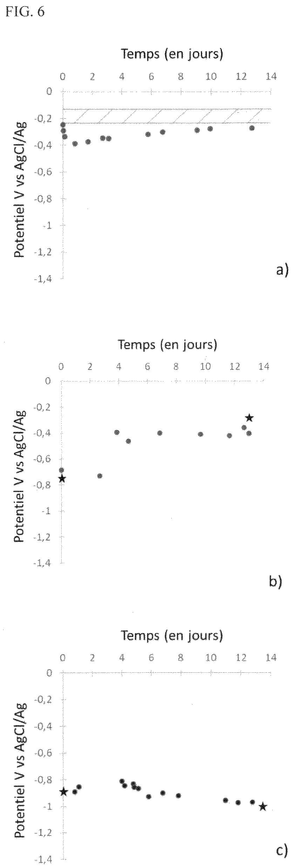

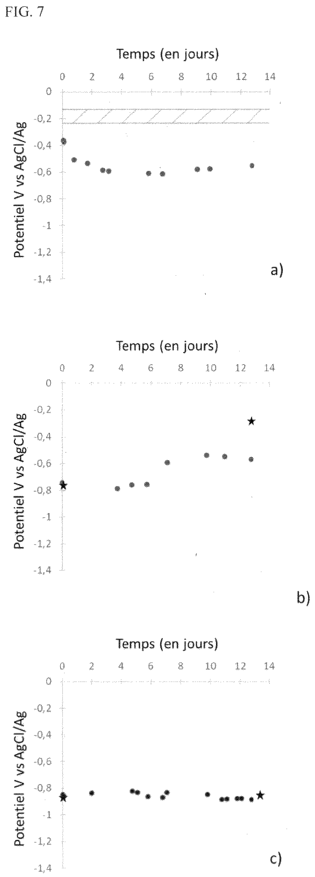

L'analyse *in situ* des potentiels pris par les électrodes des alliages 625 et 316L lors des expériences de corrosion dans NaCl-MgCl₂, sans contrôle et avec contrôle du potentiel par le couple SmCl₃/SmCl₂ dans le mélange de la présente invention ou par le couple TiCl₃/TiCl₂ sont présentés aux FIG. 6 (alliage 625, ci-après « 625 ») et FIG. 7 (316L). Sans contrôle du potentiel du sel (cf. Figures 6 (a) et 7 (a)), le potentiel pris par les électrodes de 625 et 316L sont inférieurs au potentiel du sel NaCl-MgCl₂ (matérialisé en hachures), et donc corrodés tout le long de l'expérience.

A l'inverse, en contrôlant le potentiel du sel à une valeur proche de -0,9 V vs. AgCl/Ag grâce à l'ajout du tampon SmCl₃/SmCl₂, et en fixant l'oxo-acidité grâce à la tige d'Al, le potentiel pris par les électrodes de 625 et 316L sont comparables au potentiel du sel mesuré par l'électrode, symbolisant l'absence ou faible corrosion (FIG. 6 (c) et 7 (c)).

Enfin, avec le couple TiCl₃/TiCl₂, bien que le potentiel pris par les électrodes de 625 et 316L soit maintenu autour du potentiel fixé de - 0,75 V, correspondant au potentiel du sel fixé par le couple TiCl₃/TiCl₂, pendant les premiers jours de l'expérience, à savoir 4 et 6 jours respectivement, cf. FIG. 6 (b) et 7 (b), le potentiel pris par les électrodes de 625 et 316L retrouve après 4 jours (FIG. 6 (b)) ou 6 jours (FIG. 7 (b)) des valeurs de potentiel similaires aux sels NaCl-MgCl₂ qui ne contient pas de chlorure de titane. Le potentiel pris par les électrodes de 625 et 316L est alors inférieur au potentiel du sel, se traduisant une corrosion de ces électrodes (FIG. 6 (b) et 7 (b)). Ces résultats illustrent la perte de l'espèce amphotère TiCl₂, qui s'est probablement oxydé en TiCl₄ puis volatilisé (sa température d'ébullition étant de 136°C donnée HSC).

Des analyses gravimétriques et les vitesses de corrosion associées ont été mesurées et détaillées dans le **Tableau 1** ci-dessous. Ces analyses corroborent les observations faites suite à l'analyse des potentiels en fonction du temps.

**Tableau 1 : Mesures gravimétriques et vitesses de corrosion associées des alliages 625 et 316L dans NaCl-MgCl₂ à 700a °C sans contrôle du potentiel du sel et avec contrôle du potentiel du sel (mélange) par le couple SmCl₃/SmCl₂ et de l'oxo-acidité par une tige d'Al (invention) ou par le couple TiCl₃/TiCl₂**

| Essais de corrosion | | 625 | 316L |
|---|---|---|---|
| Perte de masse (mg/cm²) | Sans contrôle du potentiel du sel | 14 à 43 | 42 à 109 |
| | Avec contrôle du potentiel du sel par le couple TiCl₃/TiCl₂ | 8,3 | 26,4 |
| | Avec contrôle du potentiel du sel selon la présente invention | 0 | 0,15 |
| Vitesse de corrosion (mm/an) | Sans contrôle du potentiel du sel | 0,5 à 1,4 | 1,5 à 3,8 |
| | Avec contrôle du potentiel du sel par le couple TiCl₃/TiCl₂ | 0,3 | 0,9 |
| | Avec contrôle du potentiel du sel selon la présente invention | 0 | 0,07 |

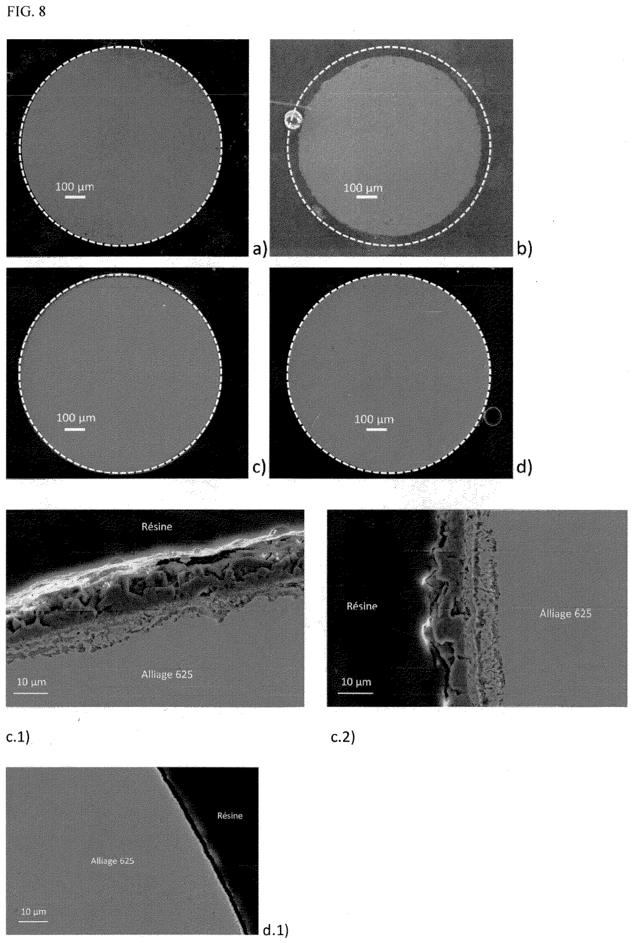

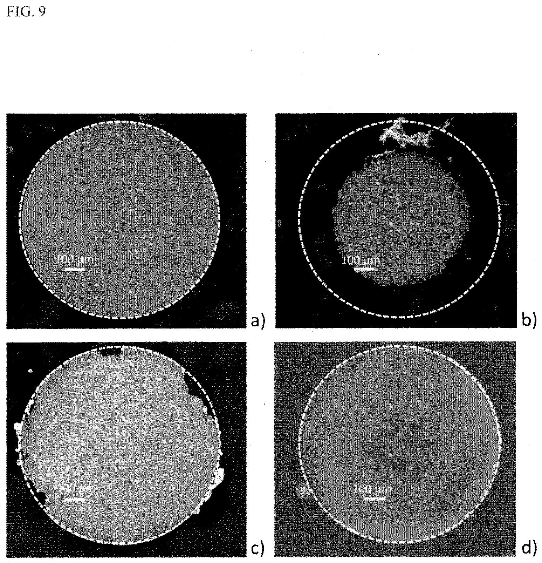

Enfin, les caractérisations *post mortem* par MEB renseignent sur le faciès de corrosion de chaque alliage immergé. Ils sont illustrés aux FIG. 8 et 9. Les micrographies MEB réalisées sur coupes transversales des alliages 625 et 316L immergés permettent d'évaluer l'état de surface après le test de corrosion, en les comparant avec les alliages non immergés ou avec des alliages immergés dans des sels de chlorures fondus tamponnée avec le couple TiCl₃/TiCl₂. Le cercle en pointillé matérialise la surface originelle du matériau. Sans contrôle du potentiel du sel, les analyses MEB mettent en évidence l'attaque au niveau du pourtour des cristaux du matériau, semblable à une corrosion intergranulaire, désolidarisant les cristaux de la matrice et exacerbant la perte de masse par déchaussement des cristaux après corrosion aux joints de grain. L'utilisation du tampon TiCl₃/TiCl₂ permet de réduire la perte de masse des matériaux après essais de corrosion de 2 semaines. Cependant, l'utilisation du mélange selon la présente invention ne montre pas seulement une diminution drastique de la perte de masse des matériaux après essais de corrosion de deux semaines, comparé à une situation en absence de contrôle de potentiel mais aussi une diminution de perte de masses des matériaux comparé à une situation où le tampon TiCl₃/TiCl₂ est utilisé pour tamponner les sels de chlorures fondus. Ainsi, il est prouvé par la présente invention qu'il n'est pas suffisant d'ajouter un tampon red/ox pour limiter la corrosion dans le temps mais qu'il est nécessaire d'utiliser un tampon particulier, à savoir le couple SmCl₃/SmCl₂, en présence d'un métal particulier, de préférence Al ou Mg, pour contrôler le potentiel et l'oxo-acidité, respectivement. En effet, fixer l'oxo-acidité a aussi son importance puisqu'elle permet de maintenir le ratio SmCl₃/SmCl₂ sans risque qu'il évolue ce qui entrainerait la perte du potentiel souhaité.

### DESCRIPTION DES FIGURES

FIGURE 1 représente le diagramme Potentiel-Oxoacidité du Samarium et de l'Aluminium dans le sel NaCl-MgCl₂ à 700°C. Données thermodynamiques calculées à partir de la base de données du logiciel HSC chemisty 6.0. Les activités des éléments sont prises à 1 sauf pour : a(SmCl₂) = a(SmCl₃) = a(AlCl₃ )=10⁻³ /a(MgCl₂)=a(NaCl)=10⁻². p(aNa₂O) correspond au cologarithme de NazO.
FIGURE 2 représente le diagramme Potentiel-Oxoacidité du Samarium et du Magnésium dans le sel NaCl-MgCl₂ à 700°C. Données thermodynamiques de HSC chemisty 6.0. Les activités des éléments sont prises à 1 sauf pour : a(SmCl₂) = a(SmCl₃) = 10⁻³ / a(MgCl₂)=a(NaCl)=10⁻². p(aNa₂O) correspond au cologarithme de NazO.

Les FIG.1 et 2 illustrent le bénéfice d'abaisser le potentiel du sel chlorure fondu.

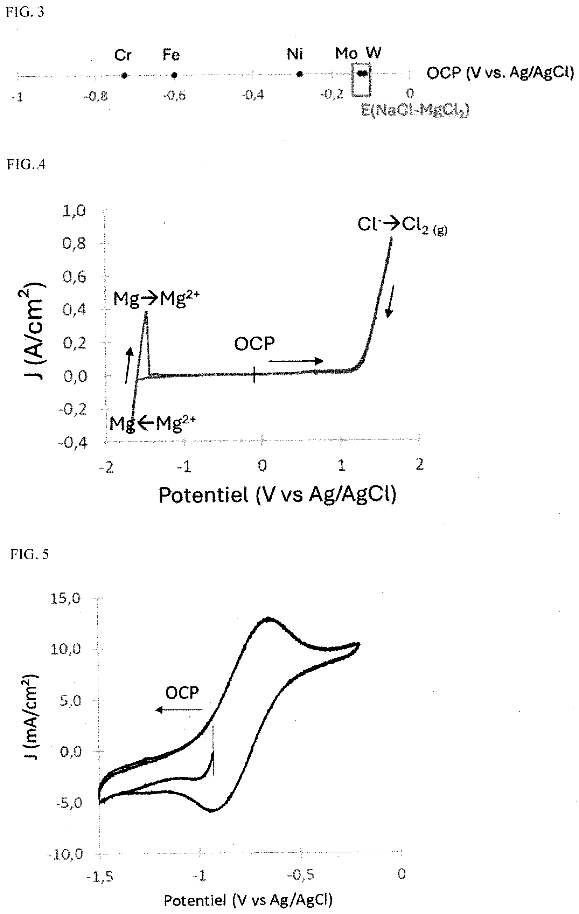

Les potentiels des sels chlorures fondus sont oxydants vis-à-vis de nombreux éléments. A titre d'exemple, le potentiel du sel eutectique NaCl-MgCl₂ à 700°C a été déterminé expérimentalement en utilisant l'électrode de tungstène comme matériau noble. Le potentiel en circuit ouvert (OCP), obtenu dans NaCl-MgCl₂, est de - 0,18 V vs Ag/AgCl (σ = 0,04 V, 15 valeurs, 5 sels fondus). Il correspond au potentiel du sel chlorure, appelé E(NaCl-MgCl₂) à la FIG.1, car cet élément n'est pas oxydé dans le sel. Le large domaine d'électroactivité, mesuré par voltampérométrie cyclique (CV) sur une électrode de tungstène (FIG. 4), est délimité par les limites cathodiques et anodiques à - 1,5 V et 1,1 V, correspondant à la réduction de Mg²⁺ en Mg et à l'oxydation de Cl⁻ en Cl₂(g), respectivement. Dans ces conditions, la plupart des matériaux d'intérêt sont susceptibles d'être oxydés. En effet, les valeurs des potentiels d'oxydation de Cr, Fe et Ni sont inférieures au potentiel du sel, soulignant la capacité de ces matériaux à être oxydés. Elles correspondent respectivement à OCP_{Cr}= - 0,73 V, OCP_{Fe}= - 0,60 V, et OCP_{Ni}= - 0,28 V par rapport à Ag/AgCl (FIG. 3). A l'inverse, le Mo dont la mesure d'OCP_{Mo}= - 0,12 V n'est pas corrodé.

Par ces considérations thermodynamiques, l'abaissement du potentiel du sel à une valeur inférieure au potentiel du Cr revient à placer ces éléments (i.e. Cr, Fe, Ni) et les alliages riches en Fe et Ni dans leur domaine d'immunité, les rendant inertes vis-à-vis du sel.

Selon la présente invention, il a été découvert que l'utilisation du couple SmCl₂/SmCl₃ s'avère efficace pour diminuer le potentiel du sel avec l'ajout d'un agent réducteur (Mg ou Al), de manière à avoir davantage de SmCl₂ que de SmCl₃ (rapport de 10 pour 1 minimum à 1000 pour 1, de préférence de 30 pour 1 à 300 pour 1) après réduction du SmCl₃ introduit. Le ratio peut se déduire de la FIG. 5, où l'on peut voir sur la CV en partant en réduction une intensité de - 2,6 mA/cm² correspondant à la réduction du SmCl₃ restant en SmCl₂. Dans le sens de l'oxydation, un pic plus intense de 12,9 mA/cm² matérialise l'oxydation du SmCl₂ contenu dans le sel et disponible à l'électrode en SmCl₃. A noter que le potentiel du sel peut être modifié en ajoutant davantage de réducteur, pour former plus de SmCl₂ au détriment de la quantité de SmCl₃. De plus, selon la présente invention, il a été découvert que l'ajout de Al ou Mg métallique, de préférence Al métallique (fil/tige d'Ag plongée dans le sel), est nécessaire afin de capter les ions oxydes O²⁻ pour fixer l'oxo-acidité (sans quoi le SmCl₂ pourrait s'oxyder en SmCl; et entrainer une augmentation du potentiel du sel).

FIGURE 3 représente les mesures des valeurs de potentiel en circuit ouvert (OCP) du Cr, Fe, Ni, Mo et W obtenus dans les sels fondus NaCl-MgCl₂. Le potentiel du sel E(NaCl-MgCl2) est défini par les mesures d'OCP obtenus sur les matériaux inertes Mo et W.

FIGURE 4 représente le domaine d'électroactivité mesuré par CV du sel NaCl-MgCl₂ obtenu par CV sur électrode de tungstène à 100 mV.s⁻¹.

FIGURE 5 représente le domaine d'électroactivité mesuré par CV du système SmCl₂/SmCl₃ obtenu sur électrode de tungstène à 100 mV.s⁻¹.

FIGURE 6 représente le suivi du potentiel pris par l'électrode d'alliage 625 immergée pendant 13 jours dans NaCl-MgCl₂ (a) sans contrôle, (b) avec contrôle du potentiel par le tampon TiCl₃/TiCl₂, (c) avec contrôle du potentiel et de l'oxo-acidité par l'ensemble SmCl₂/SmCl₃ et tige d'Al (oxo-acidité). La zone hachurée à la FIG. 6 (a) représente le potentiel des sels fondus NaCl-MgCl₂ (écart-type) et les points représentent le potentiel pris par l'électrode alliage 625 dans ces sels en fonction du temps. On note ici que le potentiel de l'alliage 625 est inférieur à celui du sel illustrant le caractère oxydant du sel vis-à-vis de l'alliage. Sur les FIG.6 (b) et 6 (c), les étoiles représentent la mesure du potentiel du sel avant et après le test de corrosion ; cette mesure s'obtient sur électrode inerte de W (tungstène) et les points représentent le potentiel pris par l'électrode de l'alliage 625 dans ce mélange en fonction du temps. Sur la FIG. 6 (b), nous notons que le potentiel du sel et le potentiel pris par l'électrode de l'alliage 625 dans ces sels sont égaux au départ - *ce qui signifie qu'il n 'y a pas de corrosion -* mais après 3-4 jours le potentiel pris par l'électrode de l'alliage 625 augmente car on a perdu le contrôle par le couple TiCl₃/TiCl₂. Le potentiel du sel est plus élevé que le potentiel du matériau (pris par l'électrode de l'alliage 625), ce qui signifie qu'il y a corrosion.

A l'inverse avec le contrôle du potentiel par le couple SmCl₃/SmCl₂ (et le contrôle de l'oxo-acidité par la tige d'Ag), le sel reste tamponné tout le long de l'essai ce qui permet d'éviter la corrosion du matériau (alliage 625). Ainsi, le matériau alliage 625 est inerte dans le mélange de sels fondus et est donc dans son domaine d'immunité pendant au moins 14 jours.

FIGURE 7 représente le suivi du potentiel pris par l'électrode d'alliage 316L immergée pendant 13 jours dans NaCl-MgCl₂ (a) sans contrôle, (b) avec contrôle du potentiel par le couple TiCl₃/TiCl₂ et (c) avec contrôle du potentiel et de l'oxo-acidité des sels par le tampon SmCl₂/SmCl₃ et la tige d'Al. Sur les FIG.7 (b) et 6 (c), les étoiles représentent la mesure du potentiel du sel avant et après le test de corrosion ; cette mesure s'obtient sur électrode inerte de W (tungstène) et les points représentent le potentiel pris par pris par l'électrode de l'alliage 316L dans ce mélange en fonction du temps. Sur la FIG. 7 (b), nous notons que le potentiel du sel et le potentiel pris par l'électrode de l'alliage 316L dans ces sels sont égaux au départ - *ce qui signifie qu'il n'y a pas de corrosion* - mais après 3-4 jours le potentiel pris par l'électrode de l'alliage 316L augmente car on a perdu le contrôle par le TiCl₃/TiCl₂. Le potentiel du sel est plus élevé que le potentiel du matériau (pris par l'électrode de l'alliage 316L), ce qui signifie qu'il y a corrosion.

A l'inverse avec le contrôle du potentiel par le couple SmCl₃/SmCl₂ (et de l'oxo-acidité par la présence de la tige d'Ag), le sel reste tamponné tout le long de l'essai ce qui permet d'éviter et/ou de limiter la corrosion du matériau (alliage 316L). Ainsi, le matériau alliage 316L est inerte dans le mélange de sels fondus et est donc dans son domaine d'immunité pendant au moins 14 jours.

FIGURE 8 représente les micrographies MEB réalisées sur coupes transverses de l'alliage 625 : (a) avant test de corrosion ; (b) après 2 semaines d'immersion dans NaCl-MgCl₂ à 700°C, sans contrôle du potentiel ; (c) avec contrôle du potentiel du sel par TiCl₃/TiCl₂; (c.1) et (c.2) sont des agrandissements de (c) sur lesquels la corrosion est bien visible ; (d) avec contrôle du potentiel par le couple SmCl₃/SmCl₂ et contrôle de l'oxo-acidité par ajout d'Al métal et (d.1) est un agrandissement de (d) sur lequel on ne voit aucune corrosion.

FIGURE 9 représente les micrographies MEB réalisées sur coupes transverses de l'acier 316L : (a) avant test de corrosion ; (b) après 2 semaines d'immersion dans NaCl-MgCl₂ à 700°C, sans contrôle du potentiel ; (c) avec contrôle du potentiel du sel par TiCl₂ et (d) avec contrôle du potentiel par le couple SmCl₃/SmCl₂ et contrôle de l'oxo-acidité par ajout d'Al métal.

## Revendications

1. Mélange m(C) comprenant :
- un mélange de sels de chlorures fondus ; .
- un mélange comprenant SmCl₃ et SmCl₂, dans lequel le rapport de la concentration de SmCl₃, exprimée en mol/kg, relatif à la concentration de SmCl₂, exprimée en mol/kg, dans le mélange m(C), [SmCl₃]/[SmCl₂], est dans la gamme de 1 :1000 à 1 :2 ;
- un métal M1 sélectionné dans le groupe consistant en aluminium, magnésium et zirconium.

2. Le mélange m(C) selon la revendication 1, dans lequel le mélange de sels de chlorures fondus est un mélange binaire ou ternaire de chlorures de métaux alcalins et/ou alcalino-terreux, de préférence le mélange de sels de chlorures fondus est NaCl-MgCl₂, NaCl-KCl-MgCl₂, MgCl₂-KCl, NaCl-MgCl₂-CeCl₃, LiCl-KCl, ou NaCl-CaCl₂, plus préférablement est NaCl-MgCl₂, NaCl-KCl-MgCl₂, MgCl₂-KCl ou NaCl-MgCl₂-CeCl₃, plus préférablement est NaCl-MgCl₂.

3. Le mélange m(C) selon la revendication 1 ou 2, dans lequel le rapport de la concentration de SmCl₃, exprimée en mol/kg, relatif à la concentration de SmCl₂, exprimée en mol/kg, dans le mélange m(C), [SmCl₃]/[SmCl₂], est dans la gamme de 1 :300 à 1 :3, de préférence dans la gamme de 1 :100 à 1 :4, plus préférablement dans la gamme de 1 :100 à 1 :5.

4. Le mélange m(C) selon l'une quelconque des revendications 1 à 3, dans lequel M1 est l'aluminium ou le magnésium, de préférence l'aluminium.

5. Le mélange m(C) selon l'une quelconque des revendications 1 à 4, dans lequel M1 est sous forme solide, de préférence M1 est une tige, un fil ou un tamis, plus préférablement une tige ou un fil.

6. Le mélange m(C) selon l'une quelconque des revendications 1 à 5, étant un mélange caloporteur.

7. Le mélangé m(C) selon l'une quelconque des revendications 1 à 6, ayant une température dans la gamme de 400 °C à 900 °C, de préférence dans la gamme de 425 °C à 850 °C, plus préférablement dans la gamme de 450 °C à 800 °C.

8. Procédé de préparation d'un mélange, de préférence du mélange m(C) selon l'une quelconque des revendications 1 à 7, le procédé comprenant :
(i) la fourniture d'un mélange de sels de chlorures ;
(ii) le chauffage du mélange de sels de chlorures fournis selon (i), de préférence à une température minimale correspondant à la température eutectique du mélange de sels de chlorures, obtenant un mélange de sels de chlorures fondus et optionnellement la purification du mélange ;
(iii) préparation d'un mélange comprenant SmCl₃ et SmCl₂ dans un récipient comprenant le mélange de sels de chlorures fondus obtenu selon (ii), optionnellement purifié selon (ii), comprenant
(iii.1) l'introduction de SmCl₃ dans ledit récipient;
(iii.2) l'ajout d'un agent réducteur, l'agent réducteur étant de l'aluminium ou du magnésium, dans le récipient ;
(iii.3) la mise en contact de l'agent réducteur ajouté selon (iii.2) et SmCl₃ introduit selon (iii.1), obtenant le mélange comprenant SmCl₃ et SmCl₂ dans le récipient comprenant le mélange de sels de chlorures fondus ;
(iv) l'ajout d'un métal M1 dans le récipient comprenant le mélange de sels de chlorures fondus et le mélange comprenant SmCl₃ et SmCl₂ obtenu selon (iii), M1 étant sélectionné dans le groupe consistant en aluminium, magnésium et zirconium.

9. Le procédé selon la revendication 8, dans lequel (ii) comprend
(ii.1) le chauffage du mélange de sels de chlorures fournis selon (i), de préférence à une température minimale correspondant à la température eutectique du mélange de sels de chlorures, de préférence pendant une durée dans la gamme de 12 h à 180 h, plus préférablement dans la gamme de 48 h à 175 h, plus préférablement dans la gamme de 96 h à 170 h, obtenant un mélange de sels de chlorures fondus ;
(ii.2) le refroidissement du mélange de sels de chlorures fondus obtenus selon (ii.1), obtenant des sels de chlorures cristallisés et un précipité ;
(ii.3) la séparation, de préférence mécanique, des sels de chlorures cristallisés et du précipité obtenus selon (ii.2) ;
(ii.4) le chauffage des sels de chlorures cristallisés séparés selon (ii.3) à une température dans la gamme de 400 °C à 900 °C, de préférence dans la gamme de 425 °C à 850 °C, plus préférablement dans la gamme de 450 °C à 800 °C, obtenant un mélange de sels de chlorures fondus purifié.

10. Le procédé selon la revendication 8 ou 9, dans lequel au moins une parmi (i), (ii), (iii) et (iv) sont effectuées dans des conditions anhydres, de préférence en présence d'un gaz inerte ou d'azote.

11. Le procédé selon l'une quelconque des revendications 8 à 10, dans lequel selon (iii.1) SmCl₃ est ajouté à une concentration dans la gamme de 0,005 à 0,7 mol, de préférence dans la gamme de 0,01 à 0,5 mol, plus préférablement dans la gamme de 0,05 à 0,2 mol, plus préférablement dans la gamme de 0,07 à 0,15 mol, par kg de sels de chlorures.

12. Le procédé selon l'une quelconque des revendications 8 à 11, dans lequel le ratio molaire de l'agent réducteur ajouté selon (iii.2) relatif à SmCl₃ introduit selon (iii.1) est dans la gamme de 0.75 :1 à 6 :1, de préférence dans la gamme de 0.9 :1 à 5 :1, plus préférablement dans la gamme de 0.95 :1 à 1 :0.95 ou plus préférablement dans la gamme de 2 :1 à 5 :1.

13. Dispositif comprenant :
- un élément configuré pour contenir ou faire circuler un mélange, l'élément ayant une paroi comprenant un ou plusieurs métaux parmi Fe, Ni et Cr en contact avec ledit mélange ;
- le mélange étant le mélange m(C) selon l'une quelconque des revendications 1 à 7, ou le mélange obtenable ou obtenu selon le procédé d'une quelconque des revendications 8 à 12.

14. Le dispositif selon la revendication 13, dans lequel l'élément configuré pour contenir ou faire circuler un mélange est un réacteur, une cuve, un réservoir et/ou un tube.

15. Méthode de protection de matériaux métalliques comprenant un ou plusieurs métaux parmi Fe, Ni et Cr pour les placer dans leur domaine d'immunité lors d'un procédé de fission nucléaire dans un ou plusieurs réacteurs de fission nucléaire à sels fondus, ou lors d'un procédé de récupération de chaleur, ou lors d'un procédé de stockage d'énergie dans une centrale solaire thermique à concentration (CSP), la méthode comprenant :
l'utilisation d'un mélange m(C) selon l'une quelconque des revendications 1 à 7, ou d'un mélange obtenable ou obtenu selon un procédé selon l'une quelconque des revendications 8 à 12 ; et
la mise en contact desdits matériaux métalliques avec le mélange.
